# EUROPÄISCHE PATENTANMELDUNG

(11) **EP 3 835 023 A1**
(43) Veröffentlichungstag der Anmeldung: **16.06.2021**
(21) Anmeldenummer: 19216001.8
(22) Anmeldetag: 13.12.2019
(51) Int. Cl.: B29B 17/02, D01G 11/00, C08B 16/00, B29K 1/00, B29K 67/00, B29L 31/00

(54) **VERFAHREN ZUR VERWERTUNG VON INHALTSSTOFFEN AUS MISCHTEXTILABFÄLLEN**

(71) Anmelder: LENZING AKTIENGESELLSCHAFT, 4860 Lenzing (AT)
(72) Erfinder: Herchl, Richard, 4910 Ried im Innkreis (AT); Klaus-Nietrost, Christoph, 4840 Vöcklabruck (AT); Theis, Sabrina, 4600 Wels (AT); Weilach, Christian, 4840 Vöcklabruck (AT)
(74) Vertreter: Hanemann, Otto

(57) **Zusammenfassung**

Verfahren zur Aufbereitung und Verwertung von zumindest Polyester-Abbauprodukte enthaltender Ablauge aus einem alkalischen Aufschlussprozess zur Gewinnung eines Celluloserohstoffs aus Mischtextilabfall, welcher zumindest eine Cellulosekomponente und eine Polyesterkomponente enthält. Um das Verfahren umweltfreundlicher und ressourcenschonender zu gestalten, wird vorgeschlagen, dass das Verfahren folgende Schritte umfasst: Abdampfung von Wasser aus der Ablauge, um das Polyester-Abbauprodukt aus der Ablauge auszufällen und ein Zweiphasengemisch mit einer wässrigen Phase und einer das Polyester-Abbauprodukt aufweisenden Feststoff-Phase zu erhalten, b) Separieren der Feststoff-Phase von der wässrigen Phase, und c) thermisch/energetische Verwertung der Feststoff-Phase.

## Beschreibung

### Technisches Feld

Die vorliegende Erfindung betrifft ein Verfahren zur Aufbereitung und Verwertung von mit Abbauprodukten verunreinigter Ablauge aus einem alkalischen Aufschlussprozess zur Gewinnung eines Celluloserohstoffs aus Mischtextilabfall.

### Stand der Technik

Die Rückgewinnung bzw. das Recycling von Rohstoffen aus Textilabfällen gewinnt in den letzten Jahren zunehmend an Bedeutung für die Textilindustrie, nicht zuletzt um die Belastung dieser Textilabfälle für die Umwelt zu reduzieren.

Das rein mechanische Recycling von Textilabfällen ist seit längerem allgemein bekannt, wobei der Textilabfall zerkleinert und daraus direkt recycelte Endprodukte wie bspw. Reinigungstücher, Füllungsmaterialen oder Isoliermaterialien hergestellt werden. Das Spinnen von Garnen aus solchen recycelten Textilfasern führt üblicherweise zu Garnen mit niedriger Qualität, welche nicht für die Produktion von neuen Textilien geeignet sind.

Zur Überwindung der oben genannten Probleme bieten sich chemische Recyclingverfahren an. So können beispielsweise cellulosische Fasern nach chemischer Vorbehandlung wieder zu regenerierten cellulosischen Fasern versponnen werden. Allerdings sind solche Prozesse zur Herstellung von regenerierten cellulosischen Formkörpern sehr sensibel auf Verunreinigungen im Celluloserohstoff, womit derart recycelter Celluloserohstoff in der Regel ungeeignet ist, um daraus Fasern zu spinnen.

In WO 2015/077807 A1 wird ein Verfahren zur Vorbehandlung von recycelten Baumwollfasern aus Textilabfällen gezeigt, bei dem zuerst Metalle aus den recycelten Baumwollfasern entfernt werden und diese dann einer oxidativen Bleiche unterzogen werden. Die so recycelten Baumwollfasern können dann zur Herstellung von regenerierten cellulosischen Formkörpern verwendet werden.

Die WO 2018/115428 A1 offenbart ein Verfahren zur Behandlung eines Rohmaterials auf Basis von Baumwolle unter alkalischen Bedingungen in Verbindung mit gasförmigen Oxidationsmitteln.

Die WO 2018/073177 A1 beschreibt wiederum ein Verfahren zum Recyceln eines Celluloserohstoffs aus cellulosischem Textilabfall. Dabei wird der Textilabfall unter alkalischen Bedingungen in Gegenwart eines Reduktionsmittels behandelt, um die cellulosischen Fasern im Textilabfall zu quellen und so Fremdstoffe besser zu entfernen. Nach der alkalischen Behandlung wird der Celluloserohstoff entweder mit Sauerstoff und/oder Ozon gebleicht.

Solche Verfahren verwenden als Ausgangsstoff reinen cellulosischen Textilabfall. In der Praxis sind die Textilabfälle aus Kleidung und Stoffen allerdings Mischtextilabfälle, also Mischungen aus cellulosischen und synthetischen Fasern. Die vorherrschende Fraktion dabei bilden Mischtextilabfälle, welche Polyester und cellulosische Fasern aufweisen. Ebenso sind Textilabfälle aus Baumwoll-Textilien meist mit Polyester aus Nähfäden, Etiketten oder dergleichen verunreinigt. Verfahren der vorgenannten Art können allerdings in der Regel keine Mischtextilabfälle verarbeiten, da signifikante Kontaminationen mit synthetischen Polymerfasern, insbesondere Polyestern, nicht mehr entfernt werden können.

Das vorliegende Verfahren betrifft jedoch Prozesse zur chemischen Aufbereitung von Mischtextilabfällen, welche neben einer Cellulosekomponente auch signifikante Mengen einer Polyesterkomponente enthalten. Beim alkalischchemischen Aufschluss eines solchen Mischtextilabfalls bei entsprechendem Druck und entsprechender Temperatur, insbesondere zur Rückgewinnung eines Celluloserohstoffs, fallen allerdings beträchtliche Mengen an Ablauge an, welche verschiedene Abbauprodukte, davon eine große Menge Polyester-Abbauprodukte beinhalten. Solche Ablaugen können nicht ohne vorherige Behandlung an eine konventionelle Abwasseraufbereitung übergeben werden, da diese in der Regel einen zu hohen chemischen Sauerstoffbedarf (CSB) und Metallgehalt aufweisen.

### Offenbarung der Erfindung

Es ist daher eine Aufgabe der Erfindung, ein Verfahren der eingangs erwähnten Art zur Aufbereitung und Verwertung von Ablauge bereitzustellen, welche dementsprechende oben angeführte Abbauprodukte enthält und dadurch eine Verwertung der Ablauge ermöglicht und die Belastung für Abwasseraufbereitungsprozesse reduziert.

Die gestellte Aufgabe wird erfindungsgemäß durch ein Verfahren gemäß Anspruch 1 gelöst.

Wird in dem erfindungsgemäßen Verfahren zur Aufbereitung und Verwertung von mit Abbauprodukten verunreinigter Ablauge aus einem alkalischen Aufschlussprozess zur Gewinnung eines recycelten Celluloserohstoffs aus Mischtextilabfall nämlich Wasser aus der Ablauge abgedampft, um das Polyester-Abbauprodukt aus der Ablauge auszufällen und ein Zweiphasengemisch mit einer wässrigen Phase und einer das Polyester-Abbauprodukt aufweisenden Feststoff-Phase zu erhalten, so kann eine reproduzierbare Trennung der Polyester-Abbauprodukte von der verunreinigten Ablauge ermöglicht werden. Wird weiter die Feststoff-Phase von der wässrigen Phase separiert, so kann die wässrige Phase der Ablauge einer konventionellen Abwasseraufbereitung zugeführt werden, wodurch die Belastung und der chemische Sauerstoffbedarf der Abwasseraufbereitung minimiert werden kann. Schließlich kann die Feststoff-Phase unabhängig von der wässrigen Phase verwertet werden, womit das gegenständliche Verfahren umweltfreundlicher gestaltet werden kann.

Unter "Polyester" wird für die Zwecke der vorliegenden Erfindung hauptsächlich Polyethylenterephthalat (PET) verstanden, das aus den Monomeren Terephthalsäure und Ethylenglycol besteht. Mit anderen weit verbreiteten Polyestern wie Polypropylenterephthalat (PPT) Polytrimethylenterephthalat (PTT) Polybutylenterephthalat (PBT) und ähnlichen, oder auch Mischungen dieser Polyester funktioniert die Erfindung jedoch ebenfalls sehr gut. Wichtig ist jeweils, daß die alkoholische Komponente, d.h. Ethylenglycol, Butandiol, Propylendiol, Trimethylenglycol, etc. in der Behandlungslösung gut löslich ist und beim Ausfällen der Terephthalsäure nicht mit ausgefällt wird.

Unter einer Ablauge im Sinne der vorliegenden Erfindung wird im Allgemeinen eine verbrauchte wässrige alkalische Behandlungslösung verstanden, wobei die Behandlungslösung zur Behandlung des Mischtextilabfalls eingesetzt wird, um einen recycelten Celluloserohstoff aus der Cellulosekomponente des Mischtextilabfalls zu erhalten. Da die Cellulosekomponente im Mischtextilabfall in der Regel durch Farbstoffe und sonstige Fremdstoffe verunreinigt und auf Faserebene mit der Polyesterkomponente vermischt ist, werden die Fremdstoffe und die Polyesterkomponente durch die alkalische Behandlungslösung herausgelöst und zu Abbauprodukten abgebaut, insbesondere hydrolysiert. Die Ablauge enthält damit als Abbauprodukte zumindest Polyester-Abbauprodukte und gegebenenfalls Farbstoff- oder sonstige Fremdstoff-Abbauprodukte.

Während dem alkalischen Aufschlussprozess werden also das Molekulargewicht und die Molekülkettenlänge der Polyestermoleküle in der Polyesterkomponente durch Hydrolyse, die in Gegenwart der wässrigen alkalischen Behandlungslösung stattfindet, gezielt verringert. Auf diese Weise werden die Moleküle der Polyesterkomponente in ihrer Molekülkettenlänge immer weiter reduziert und schließlich in ihre monomeren Bausteine Terephthalsäure und Ethylenglykol aufgespalten. Die Art des dabei in der alkalischen Behandlungslösung gebildeten Terephthalates hängt im Wesentlichen von dem in der Behandlungslösung enthaltenen alkalischen Hydrolysemittel ab. Wird etwa NaOH verwendet, so enthält das Polyester-Abbauprodukt vorwiegend Dinatriumterephthalat, das in der Behandlungslösung leicht löslich ist. Dies ermöglicht in weiterer Folge eine verfahrenstechnisch einfache Trennung der Polyester-Abbauprodukte von der Cellulosekomponente, wodurch der Celluloserohstoff aus dem Mischtextilabfall mit hoher Reinheit rückgewonnen werden kann. Durch die in der Regel milden Prozessbedingungen findet nämlich nur ein unwesentlicher Abbau der Cellulose-Polymere in der Cellulosekomponente statt. Gleichzeitig kann die Cellulosekomponente jedoch vorteilhafterweise durch die Behandlungslösung teilweise aufgeschlossen und von Verunreinigungen, wie etwa Farbstoffen oder Vernetzern, befreit werden, was wiederum der Qualität des rückgewonnenen Celluloserohstoffs zuträglich ist.

Das in der Ablauge als Polyester-Abbauprodukt enthaltene Dinatrium-Terephthalat fällt beim Abdampfen von Wasser aus der Ablauge aus, wodurch sich ein Zweiphasengemisch mit einer Feststoff-Phase und einer wässrigen Phase bildet, wobei die Feststoff-Phase das Dinatrium-Terephthalat aufweist und die wässrige Phase aus dem wässrigen Überstand gebildet wird, welcher Reste der alkalischen Behandlungslösung und gegebenenfalls andere Abbauprodukte enthält. Diese wässrige Phase kann unter geringer Umweltbelastung entweder direkt einer Abwasserbehandlung zugeführt werden oder alternativ zur Rückgewinnung der alkalischen Behandlungslösung verwendet werden. In einer weiteren Ausführungsform wird die wässrige Phase nochmals eingedampft, wobei weiteres Terephthalat ausgefällt werden kann. Damit wird zum einen der Gesamtbrennwert der erfindungsgemäß erhaltenen Stoffe erhöht und zum anderen der CSB der der Abwasserbehandlung zugeführten wässrigen Phase weiter reduziert. Die Feststoff-Phase kann demnach unabhängig von der wässrigen Phase einer Verwertung zugeführt werden und muss nicht über eine ressourcenintensive und wenig umweltfreundliche gemeinsame Aufbereitung geführt werden.

Unter recyceltem Celluloserohstoff wird im Sinne dieser Erfindung Recyclingzellstoff, Textilzellstoff, Baumwollzellstoff, Hadernzellstoff oder dergleichen oder als Kombinationen davon verstanden. Dieser Celluloserohstoff kann insbesondere wiederum als Ausgangsmaterial für die Herstellung von regenerierten Cellulosefasern wie Lyocell-, Viskose-, Modal- oder Cupro-Fasern geeignet sein. Alternativ kann der recycelte Celluloserohstoff als Ausgangsmaterial für die Herstellung von Papier, papierähnlichen Materialien oder Vliesstoffen aus Zellstoff dienen.

Im Allgemeinen wird zudem erwähnt, dass der Mischtextilabfall im Sinne der vorliegenden Erfindung eine Mischung, enthaltend beliebige Cellulosefasern, welche die Cellulosekomponente des Mischtextilabfalls bilden, und beliebige Polyesterfasern, welche die Polyesterkomponente bilden, sein kann. Geeignete Cellulosefasern umfassen beispielsweise natürliche Cellulosefasern, wie etwa Baumwolle, Flachs, Hanf, Ramie, Kapok, etc., oder regenerierte Cellulosefasern, wie etwa Rayon, Viskose, Lyocell, Cupro oder Modal. Die oben angegebenen Fasern können in Durchmesser und Länge variieren und können Endlosfasern (Filamente) oder Stapelfasern sein oder auch in Vliesform vorliegen. Ein solcher Mischtextilabfall weist jeweils zumindest 1 Gew.-%, bevorzugt zumindest 2 Gew.-%, besonders bevorzugt zumindest 3 Gew.-%, der Cellulose- und der Polyesterkomponente auf.

Ferner kann ein besonders ökonomisches und zuverlässiges Recyclingverfahren bereitgestellt werden, wenn der Mischtextilabfall ein Pre- und / oder Post-Consumer-Textilabfall ist. Unter Post-Consumer-Textilabfall werden Textilien verstanden, die bereits beim Endverbraucher angelangt waren und daher durch ihre Verwendung Fremdstoffe, in teils erheblichem Umfang, enthalten können. Post-Consumer-Textilabfall kann eines oder mehrere der folgenden Elemente umfassen: getragene Kleidungsstücke wie Hemden, Jeans, Röcke, Kleider, Anzüge, Overalls, Hosen, Unterwäsche, Pullover, und der gleichen; gebrauchte Heimtextilien wie Bettwäsche, Handtücher, Vorhänge, Tücher, Tischdecken, Sitzbezüge, Vorhänge, Möbelstoffe oder dergleichen; Vliesartikel wie Tücher, Windeln, Filter oder ähnliches. Unter Pre-Consumer-Textilabfällen werden textile Materialien verstanden, die noch nicht beim Endverbraucher angelangt waren, sondern als Abfall im Verlauf der Herstellung angefallen sind. Das können etwa Zuschnittreste oder Abfälle aus der Herstellung von Kleidungsstücken, Heimtextilien, Vliesstoffen usw. oder Produktionsabfälle aus der Herstellung von Garnen, Textilien oder regenerierten Cellulosefasern sein.

Weitere bevorzugte Ausführungsformen der Erfindung ergeben sich aus den abhängigen Ansprüchen 2 bis 11.

### Wege zur Ausführung der Erfindung

Im Folgenden wird die Erfindung anhand einer ersten Ausführungsvariante exemplarisch dargestellt. Weitere Ausführungsvarianten ergeben sich aus den in der Beschreibung erwähnten Abwandlungen, welche in beliebiger Weise miteinander kombiniert werden können.

Gemäß einer ersten Ausführungsvariante wird in dem erfindungsgemäßen Verfahren die Abbauprodukte beinhaltende Ablauge aufbereitet und verwertet, welche aus einem alkalischen Aufschlussprozess zur Gewinnung eines recycelten Celluloserohstoffs aus einem Mischtextilabfall stammt. Der Mischtextilabfall weist dabei zumindest eine Cellulosekomponente und eine Polyesterkomponente auf, wobei diese zusätzlich mit Farbstoffen, Vernetzern oder dergleichen verunreinigt sein können. Der alkalische Aufschlussprozess ist dabei vorzugsweise eine alkalische Kochung des Mischtextilabfalls in einer wässrigen alkalischen Behandlungslösung, um die Polyesterkomponente zu Polyester-Abbauprodukten zu hydrolysieren und in der Behandlungslösung zu lösen. Die Cellulosekomponente wird in dem Aufschlussprozess nur minimal herausgelöst bzw. abgebaut, und kann daher leicht von der wässrigen Behandlungslösung separiert werden, und somit von den Polyester-Abbauprodukten getrennt werden, um den recycelten Celluloserohstoff zu gewinnen. Die überbleibende, verbrauchte Behandlungslösung wird dann als die die Abbauprodukte enthaltende Ablauge gemäß dem vorliegenden Verfahren aufbereitet.

Da die Ablauge die Abbauprodukte aus einem alkalischen Aufschlussprozess von Mischtextilabfällen enthält, unterscheidet sie sich in ihrer Zusammensetzung grundlegend von Ablaugen, welche in klassischen Zellstoff-Produktionsprozessen (bspw. durch Sulfat- oder Sulfit-Aufschluss) anfallen. Hauptziel des chemischen Aufschlusses im Rahmen des gegenständlichen Verfahrens ist auch das Herauslösen von Polyester (insbesondere PET) und anderen nicht-cellulosehaltigen Bestandteilen, sowie von diversen Farbstoffen und anderen in der Textilindustrie zum Einsatz kommenden Substanzen (Weichmacher, etc.) aus dem Mischtextilabfall, um eine gereinigte Cellulosekomponente zu erhalten. Die Ablauge enthält daher, wie zuvor beschrieben, maßgeblich Polyester-Abbauprodukte, und ist im Wesentlichen frei von Ligninen und anderen Holz-spezifischen Verunreinigungen, Abbauprodukten oder Inhaltsstoffen. "Im Wesentlichen" bedeutet im Zusammenhang mit der vorliegenden Erfindung, daß sämtliche im erfindungsgemäßen Verfahren vorkommenden Stoffe üblicherweise kein Lignin enthalten. Spuren von Lignin könnte höchstens zufällig und unbeabsichtigt in das erfindungsgemäße Verfahren gelangen.

Zum alkalischen Aufschluss wird entsprechend der ersten Ausführungsvariante NaOH als Hydrolysemittel verwendet. Die Polyester-Abbauprodukte weisen demnach vorwiegend Dinatriumterephthalat (C₈H₄O₄Na₂) und Monoethylenglykol (C₂H₆O₂) auf. Aus 1 mol PET und 2 mol NaOH entstehen stöchiometrisch dabei 1 mol Dinatriumterephthalat und 1 mol Monoethylenglykol als Polyester-Abbauprodukte. Gewichtsmäßig stellt sich das Verhältnis dann folgendermaßen dar: Für die Umwandlung von 1 kg PET werden dazu stöchiometrisch ca. 0,42 kg NaOH konsumiert und es werden ca. 1,1 kg Dinatriumterephthalat und 0,33 kg Monoethylenglykol gebildet. Da in dem alkalischen Aufschlussprozess üblicherweise mit überstöchiometrischen Verhältnissen von NaOH gearbeitet wird, beinhaltet die Kocherablauge auch entsprechende Mengen an noch nicht verbrauchtem Effektivalkali/NaOH. Eine wesentliche Eigenschaft der Ablauge stellt deren Gehalt an den Polyester-Abbauprodukten Dinatriumterephthalat und Monoethylenglykol dar, die eine Behandlung der Ablauge mit in der Zellstoffindustrie üblichen Rückgewinnungsverfahren nicht möglich machen. Weiters fehlen der Ablauge im Vergleich zu konventionellen Kocherablaugen aus dem Zellstoffaufschluss jegliches Lignin und auch jegliche Hemicellulosen, da es sich eben um einen Aufschluss von Mischtextilabfällen und nicht von Holz handelt. Dinatriumterephthalat, ein organisches Salz, stellt für den Prozess eine Herausforderung dar, da es aufgrund seiner Löslichkeit bei der Eindampfung der Ablauge, welche für eine kalorische Verwertung der Ablauge notwendig ist, um den Heizwert der Ablauge für eine Verbrennung entsprechend einzustellen, ab einem Feststoffanteil von ca. 20% Massenprozent an Dinatriumterephthalat beginnt auszufallen (abhängig von Restgehalt an anderen Feststoffen).

In einer weiteren Ausführungsvariante können zum alkalischen Aufschluss auch andere geeignete Hydrolysemittel verwendet werden, was jedoch hier nicht näher ausgeführt werden muß.

Die vom alkalischen Aufschlussprozess kommende Ablauge weist je nach Kochungsbedingungen und Rohmaterialeigenschaften einen Feststoffgehalt von 3-10% auf. Zuerst passiert die Lauge dabei einen in der Zellstoffindustrie üblichen Schlitzsortierer (Faserfilter) zur weitgehenden Entfernung restlicher faserartiger Bestandteile, welche sich in einer späteren Eindampfung nachteilig bzw. störend auswirken würden.

In einem ersten Schritt des Verfahrens zur Aufbereitung und Verwertung der die Abbauprodukte enthaltenden Ablauge wird Wasser aus der Ablauge abgedampft, um das Polyester-Abbauprodukt aus der Ablauge auszufällen und ein Zweiphasengemisch mit einer wässrigen Phase und einer das Polyester-Abbauprodukt aufweisenden Feststoff-Phase zu erhalten. Die von Faserresten befreite Ablauge wird dabei einem Verdampfungsaggregat zugeführt. Bei diesem Aggregat kann es sich in einer Ausführungsvariante um einen Fallfilmverdampfer handeln (z.B. einen Dünnschichtverdampfer), der mit Niederdruckdampf beheizt wird. Andere geeignete Aggregate und Heizmittel sind ebenfalls verwendbar. Hier ist nun auf die Löslichkeit der in der Lauge befindlichen Hauptkomponenten zu achten. Berücksichtigt man diese, beginnt bei einem Feststoffgehalt von ca. 20% das Dinatriumterephthalat als Polyester-Abbauprodukt auszufallen und der Anstieg auf ca. 30% erfolgt dann dementsprechend rasch. Ab etwa einem Feststoffgehalt von 30% sollte der Verdampfungsprozess unterbrochen werden, um nachteilige Auswirkungen der Feststoff-Phase auf das Verdampfungsaggregat (Anbackungen, rückläufiger Wärmeübergang) zu vermeiden. Begünstigt wird dies vor allem durch die starke Tendenz der Dinatriumterephthalat-Partikel, größere Agglomerate zu bilden.

In einem weiteren Schritt des Verfahrens wird dann die Feststoff-Phase von der wässrigen Phase getrennt. Dabei wird die auf einen Feststoffgehalt zwischen 20 und 30% eingedampfte Ablauge einem mechanischen Separator zugeführt. Bevorzugt können hier diverse Arten von Zentrifugen und Dekanter zum Einsatz kommen. Für eine kuchenbildende Filtration sind der Feststoffgehalt und die Partikeleigenschaften sehr nachteilig, da diese nur durch den Einsatz von großen Mengen an Filtrationshilfsmitteln zu bewerkstelligen wäre. In dieser Separationseinheit wird ein Großteil der Feststoff-Phase von der wässrigen Phase getrennt, wobei sich letztere hauptsächlich aus Wasser, Restalkali und Monoethlyenglykol bzw. dessen weiteren Abbauprodukten zusammensetzt. Der Flüssigkeitsüberstand wird dabei von der Feststoff-Phase getrennt. Die Feststoff-Phase weist danach einen Feststoffgehalt von ca. 60% auf, da die noch inhärente Feuchte nicht vollständig abgetrennt werden kann. Es kann dabei jedoch ein Heiz- bzw. Brennwert erreicht werden, der zur Verbrennung des Feststoffes in einem Verbrennungskessel ausreichend ist, da in der Restfeuchtigkeit auch Monoethylenglykol enthalten ist, welches den Heiz- bzw. Brennwert zusätzlich zu dem der Feststoff-Phase noch steigert, wobei jedenfalls ein möglichst hoher Feststoffgehalt wünschenswert ist.

In bevorzugten Ausführungen des erfindungsgemäßen Verfahrens erfolgt das Abdampfen von Wasser aus der Ablauge in zwei oder mehr Stufen, bevorzugt in zwei bis zehn Stufen, besonders bevorzugt in zwei bis sechs Stufen. Je mehr Stufen eingesetzt werden, umso energieeffizienter ist die Betriebsweise des Abdampfens, aber es ist auch ein höherer Investitionsaufwand notwendig. Insbesondere soll das Abdampfen in so vielen Stufen erfolgen, bis das finale Filtrat keinen Rückstand an Dinatriumterephthalat mehr enthält. Dabei kann jeder Stufe ein mechanischer Separator (z.B. eine Zentrifuge) nachgeschaltet sein, um die Feststoffphase abzuscheiden und in einem Verbrennungskessel zu verwerten, oder die Eindampfstufe selbst zur Eindampfung von Suspensionen dementsprechend ausgeführt sein (z.B.: Dünnschichtverdampfer). In einer bevorzugten Ausführungsform der vorliegenden Erfindung ist mindestens einer Stufe ein mechanischer Separator zur Trennung der Feststoff- und Flüssigphase nachgeschaltet. Es können jedoch auch mehreren Stufen jeweils ein mechanischer Separator zur Trennung der Feststoff- und Flüssigphase nachgeschaltet sein.

Die so separierte Feststoff-Phase wird in einer Ausführungsvariante mittels einer Förderschnecke einem Verbrennungskessel - in diesem Fall mit einer Schmelzkammerfeuerung - zugeführt und dort zur thermischen und/oder energetischen Verwertung verbrannt. Dabei kann durch die Verbrennung mittels Dampfgenerierung (Dampftrommel mit Natur- oder Zwangsumlauf) Dampf erzeugt werden. Wird dieser Dampf zumindest teilweise als Hochdruckdampf erzeugt, so kann damit auch elektrischer Strom erzeugt werden, indem der Hochdruckdampf oder ein Teilstrom des Hochdruckdampfes einer Dampfturbine zugeführt wird, welche einen Generator antreibt.

Im Verbrennungskessel, der bevorzugt eine Schmelzkammerfeuerung beinhaltet (sogenannter Soda- oder Kraftkessel), bildet sich dabei eine Soda(Na₂CO₃)Schmelze und auch Asche, die sich zum Großteil aus Soda (Na₂CO₃) zusammensetzt. Das bei der Verbrennung entstehende Rauchgas wird dabei mittels einem Elektro- oder Schlauchfilter entstaubt, ggf. noch weiter aufbereitet (Entschwefelung, Entstickung) und danach einem Kamin zugeführt. Der abgeschiedene Staub, das zum Großteil aus Soda besteht, kann in weiterer Folge gesammelt, kompaktiert und ggf. in diverse Industriesparten verkauft werden

Die vom Kessel abgezogene Sodaschmelze wird einem Schmelzeauflösebehälter zugeführt, wo diese abgekühlt, und wieder in Lösung gebracht wird. Der so erhaltene wässrige Strom mit gelöstem Natriumcarbonat kann dann entweder dazu verwendet werden, um saure Abwässer aus der Zellstoffproduktion zu neutralisieren oder - bei genügend Restgehalt an Effektivalkali - einer konventionellen Kraft-Prozess-Chemikalienrückgewinnung zur Rückgewinnung von NaOH zugeführt werden.

Alternativ kann in einer weiteren Ausführungsvariante die in der Kocherablauge vorhandene Menge an Dinatriumterephthlat zur weiteren Verwertung mit einer entsprechenden Menge Säure versetzt werden (etwa Schwefelsäure, welche auf Stoffmengenbasis der Menge des vorhandenen Dinatriumterephthalats entspricht). Durch die Reaktion mit Schwefelsäure entsteht dann Terephthalsäure, die aufgrund ihrer Löslichkeit sofort ausfällt und Natriumsulfat, das in Lösung bleibt. Die Terephthalsäure könnte dann auch einem Verbrennungsprozess zugeführt werden und das Filtrat müsste mit einer gewissen Sulfatfracht einer Abwasseraufbereitung zugeführt werden oder das Natriumsulfat mittels Eindampfung oder Kühlkristallisation aus dem Filtrat wiedergewonnen wird.

Je nach Restfeststoffgehalt der wässrigen Phase aus dem Separator kann diese wässrige Phase in einer Ausführungsform direkt einer Abwasseraufbereitung zugeführt werden oder in einer alternativen Ausführungsform zur weiteren Verwertung noch einmal eingedampft werden. Dabei können die Brüden aus dem ersten Verdampfungsschritt nach erfolgter Brüdenverdichtung zur Verdampfung verwendet werden. Bei Bedarf muss noch Frischdampf ergänzt werden (Niederdruckdampf). Danach wird die eingedampfte Lauge mittels einem Filter oder Separator (je nach Feststoffgehalt) wieder in eine Fest- und eine Flüssigphase aufgetrennt. Je nach Ausgangsrohstoff und Trennschärfe kann das Filtrat entweder zum Zellstoffprozess für Waschschritte oder zur Neutralisierung saurer Abwässer rückgeführt werden oder einer Abwasseraufbereitungsanlage zugeführt werden. Der wiederum erhaltene Feststoff wird dem Verbrennungskessel zugeführt.

### Beispiel:

Post-Consumer Alttextilien (Mischung aus Baumwolle und Polyester, 80 zu 20 Gew.-%) wurden mit Natronlauge (15 Gew.-% NaOH, bezogen auf die Masse an Alttextilien) bei einem Flottenverhältnis von 1:7 (Masse Alttextil:Lauge) gekocht. Die Temperatur betrug 150°C bei einer Kochdauer von 120 min. Aufgrund der unter diesen Bedingungen stattfindenden Depolymerisation der Polyesterfasern gelangte das gebildete und unter diesen Bedingungen wasserlösliche Dinatriumterephthalat in die Kocherlauge und diese wurde schließlich vom verbliebenen Feststoff (den Baumwollfasern) durch ein Sieb abgetrennt.

Aus der Kochung von Alttextilien fällt pro Stunde eine Laugemenge von ca 1,75 t , mit einem Trockensubstanzgehalt von ca. 10% und einer Temperatur knapp unterhalb der Siedetemperatur (ca. 95°C) an. Diese Ablauge wird in einer mehrstufigen Hintereinanderschaltung von Verdampfung und Filtration auf einen Trockensubstanzgehalt von 65% eingedickt, dabei weist die Lauge einen Heizwert von 7.300 kJ/kg auf. Der Massenstrom nach der Verdampfung beträgt 0,27 t/h. Dies geschieht in drei hintereinander geschalteten Eindampfungsstufen, wobei die Wiederverwertung von Brüden einstweilen vernachlässigt wird und jede Stufe mit Frischdampf versorgt wird. Für dies gesamte Verdampfung benötigt man ca. 1,52 t/h Dampf mit einem Temperaturniveau von 115°C und 1,677 bara was einer Niederdruckdampfmenge von ca. 1,47t/h (4,9 bara, 155°C) entspricht. Dabei wird nach jeder Abdampfung der Feststoff mittels einer Filtrationseinheit abgeschieden und letztlich wieder mit dem Filtrat vermengt, um Anbackungen auf den Heizflächen und Transportprobleme zu verhindern. Die Gesamtkondensatmenge beträgt dabei 1,48 t/h. Das entspricht einer Wärmeleistung von ca. 3,4 GJ/hr. Der eingedickte Laugenstrom wird danach einem Laugeverbrennungskessel (Naturumlauf) zugeführt. Bei einer Brennkammertemperatur oberhalb der Ascheschmelztemperatur (ca. 870°C) können daraus unter Annahme vollständiger Verbrennung bei einer Frischwasserzufuhr von ca. 330 kg/hr folgende Prozessströme generiert werden:
- Rauchgas: ca. 1000 Nm³/hr bei einer Temperatur von 130°C und Druck von 1,00 bara mit folgender Zusammensetzung
   ∘ CO₂: 12,3 vol%
   ∘ N₂: 66,18 vol%
   ∘ O₂: 1,27 vol%
   ∘ H₂O: 20,24 vol%
   ∘ SO₂: 0,0033 vol%
- Asche: ca. 8,5kg/hr mit einer Aschetemperatur von 210°C und einer Aschezusammensetzung von 99,1% Natriumcarbonat (Rest Natriumsulfat)
- Schmelze: ca. 77 kg/hr mit einer Temperatur von 850°C und folgender Zusammensetzung (Na₂CO₃: 96,45 wt%, Na₂SO₄: 0,18 wt%, Na₂S: 0,9 wt%, Rest Kohlenstoff und Inertstoffe)
- Energie in Form von Hochdruckdampf (500°C, 50bar): ca. 300 kg/hr
- Benötigte Zusatzluft für Verbrennung: ca. 900 m³/hr (geregelt auf 9% Luftüberschuss)
- Boiler Blowdown: ca. 6,5 kg/hr

## Patentansprüche

1. Verfahren zur Aufbereitung und Verwertung von zumindest Polyester-Abbauprodukte enthaltender Ablauge aus einem alkalischen Aufschlussprozess zur Gewinnung eines Celluloserohstoffs aus Mischtextilabfall, welcher zumindest eine Cellulosekomponente und eine Polyesterkomponente enthält, wobei das Verfahren folgende Schritte umfasst:
a) Abdampfen von Wasser aus der Ablauge, um das Polyester-Abbauprodukt aus der Ablauge auszufällen und ein Zweiphasengemisch mit einer wässrigen Phase und einer das Polyester-Abbauprodukt aufweisenden Feststoff-Phase zu erhalten,
b) Separieren der Feststoff-Phase von der wässrigen Phase, und
c) Verwertung der Feststoff-Phase.

2. Verfahren nach Anspruch 1, **dadurch gekennzeichnet, dass** nach dem Schritt b) die wässrige Phase einer Abwasseraufbereitung oder anderweitigen Nutzung im Zellstoff-Produktionsprozess zugeführt wird.

3. Verfahren nach einem der Ansprüche 1 bis 2, **dadurch gekennzeichnet, dass** die Feststoff-Phase in Schritt c) thermisch zur Energieerzeugung in Form von Dampf und/oder Strom verwertet wird.

4. Verfahren nach Anspruch 3, **dadurch gekennzeichnet, dass** nach dem Schritt c) die Feststoff-Phase einem Kessel mit Schmelzkammerfeuerung zugeführt wird.

5. Verfahren nach einem der Ansprüche 1 bis 4, **dadurch gekennzeichnet, dass** in Schritt a) Wasser so lange aus der Ablauge abgedampft wird, bis diese einen Feststoffgehalt zwischen 20 und 40 Gew.-% aufweist.

6. Verfahren nach einem der Ansprüche 1 bis 5, **dadurch gekennzeichnet, dass** die Ablauge NaOH aufweist und das Polyester-Abbauprodukt ein Natriumsalz der Terephthalsäure ist.

7. Verfahren nach einem der Ansprüche 1 bis 6, **dadurch gekennzeichnet, dass** die verunreinigte Ablauge im Wesentlichen frei von Ligninen ist.

8. Verfahren nach einem der Ansprüche 1 bis 7, **dadurch gekennzeichnet, dass** das alkalische Aufschlussverfahren des Mischtextilabfalls eine alkalische Hydrolyse der Polyesterkomponente zu Polyester-Abbauprodukten umfasst.

9. Verfahren nach Anspruch 8, **dadurch gekennzeichnet, dass** das alkalische Aufschlussverfahren weiter ein Abtrennen der Cellulosekomponente von den Polyester-Abbauprodukten umfasst, um den Celluloserohstoff zu gewinnen.

10. Verfahren nach Anspruch 1, **dadurch gekennzeichnet, dass** das Abdampfen von Wasser aus der Ablauge in zwei oder mehr Stufen, bevorzugt in zwei bis zehn Stufen, besonders bevorzugt in zwei bis sechs Stufen erfolgt.

11. Verfahren nach Anspruch 10, wobei mindestens einer Stufe ein mechanischer Separator zur Trennung der Feststoff- und Flüssigphase nachgeschaltet ist.

12. Verfahren nach Anspruch 10, **dadurch gekennzeichnet, daß** soviele Durchgänge durchgeführt werden, bis das finale Filtrat keinen Rückstand an Dinatriumterephthalat mehr enthält.
